# EUROPÄISCHE PATENTSCHRIFT

(11) **EP 3 014 677 B1**
(45) Veröffentlichungstag und Bekanntmachung des Hinweises auf die Patenterteilung: **03.04.2019**
(21) Anmeldenummer: 14748099.0
(22) Anmeldetag: 02.06.2014
(51) Int. Cl.: H01M 2/20

(54) **VERBINDUNGSSTÜCK ZUM VERBINDEN VON POLEN ZWEIER BATTERIEN ODER BATTERIEZELLEN UND HERSTELLUNGSVERFAHREN FÜR EIN VERBINDUNGSSTÜCK ZUM VERBINDEN VON POLEN ZWEIER BATTERIEN ODER BATTERIEZELLEN**
CONNECTING PIECE FOR CONNECTING POLES OF TWO BATTERIES OR BATTERY CELLS, AND PRODUCTION METHOD FOR A CONNECTING PIECE FOR CONNECTING POLES OF TWO BATTERIES OR BATTERY CELLS
RACCORD PERMETTANT DE RELIER LES PÔLES DE DEUX BATTERIES OU ÉLÉMENTS DE BATTERIE ET PROCÉDÉ DE FABRICATION D'UN RACCORD PERMETTANT DE RELIER LES PÔLES DE DEUX BATTERIES OU ÉLÉMENTS DE BATTERIE

(30) Priorität: 24.06.2013 DE 102013010472
(43) Veröffentlichungstag der Anmeldung: 04.05.2016
(73) Patentinhaber: KME Germany GmbH & Co. KG, 49074 Osnabrück (DE)
(72) Erfinder: KOVERMANN, Marc, 49170 Hagen a. T. W. (DE); RUMBACH, Albert, 52066 Aachen (DE)
(74) Vertreter: Griepenstroh, Jörg
(86) Internationale Anmeldenummer: PCT/DE2014/000270
(87) Internationale Veröffentlichungsnummer: WO 2014/206385

(56) Entgegenhaltungen:
- WO-A1-2012/102160
- DE-A1-102007 063 177
- DE-A1-102011 080 977
- DE-A1-102012 101 771
- JP-A- 2010 225 339

## Beschreibung

Die Erfindung betrifft ein Verbindungsstück zum leitfähigen Verbinden von Polen zweier Batterien oder Batteriezellen, das einen Grundkörper mit zumindest einer Ausnehmung aufweist, wobei zumindest ein Einlageelement im Innenbereich zumindest einer Ausnehmung angeordnet ist. Die Erfindung betrifft außerdem ein Herstellungsverfahren für ein solches Verbindungsstück.

Elektrisch angetriebene Kraftfahrzeuge verfügen über Batterien, die aus einzelnen Batteriezellen zusammengesetzt sind. Es handelt sich dabei zumeist um Lithium-Ionen-Batterien, wobei die einzelnen Zellen aus einer Anode sowie einer Kathode aufgebaut sind, die jeweils aus unterschiedlichen Materialien bestehen. Die einzelnen Zellen werden in Form einer Reihenschaltung miteinander verbunden, um die erforderliche Gesamtspannung zu erzeugen.

Zu diesem Zweck müssen die einzelnen Zellen einer Batterie mit Hilfe eines Verbindungsstückes miteinander verbunden werden. Dabei werden jeweils die Anode einer Zelle und die Kathode der nachfolgenden Zelle miteinander verbunden.

Anoden werden häufig auf Basis einer Aluminiumlegierung hergestellt, wohingegen Kathoden zumeist auf einer Kupferlegierung basieren.

Die Verbindungsstücke sollen eine gute elektrische Leitfähigkeit aufweisen, so dass Kupfer ein bevorzugtes Herstellungsmaterial ist. Wird aber ein Verbindungsstück aus Kupfer unmittelbar mit einem Batteriekontakt aus Aluminium verbunden, so besteht die Gefahr, dass bei Gegenwart von Sauerstoff oder Luftfeuchtigkeit das Verbindungsstück bzw. die Kontaktfläche zwischen Verbindungsstück und Batteriekontakt, korrodiert und somit zerstört wird.

Dies kann dadurch verhindert werden, dass an der Kontaktstelle zwischen Batteriepol und Verbindungsstück identische Materialien (beispielsweise jeweils Aluminium) zum Einsatz kommen. Gleichzeitig soll aber das Verbindungsstück die bei Kupfer vorhandene sehr gute Leitfähigkeit besitzen.

Demzufolge sind aus dem Stand der Technik Verbindungsstücke bekannt, deren Anbindungspunkte dem Material der Batteriekontakte entsprechend ausgebildet sind.

So ist beispielsweise aus der DE 10 2011 080 977 A1 ein Zellverbinder zur elektrischen Verbindung von Terminals von Batteriezellen bekannt, der aus mehreren Materialschichten besteht, wobei abwechselnd Schichten aus einem ersten Material und einem zweiten Material angeordnet sind. Bei diesen Materialien kann es sich um Kupfer und Aluminium handeln. Die jeweiligen Schichten besitzen zwei Löcher, wobei die Löcher in den Kupferschichten größer sind als die Löcher in den Aluminiumschichten. Die Schichten sind derart übereinander angeordnet, dass das kleinere Loch koaxial zu dem größeren Loch angeordnet ist. Dadurch bildet sich im Innenbereich der größeren Löcher eine Anbindungsstelle aus Aluminium aus, so dass bei der Montage des Zellverbinders an den Batteriezellen die Aluminiumpole mit einem Kontaktbereich aus Aluminium verbunden werden können. In umgekehrter Anordnung kann dabei auch eine Anbindungsstelle für Kupferpole hergestellt werden.

Nachteilig an einem derartigen Verbindungsstück ist zum einen die aufwendige Herstellungsweise, da eine Vielzahl von einzelnen Materialschichten präzise aufeinander angeordnet werden muss. Gleichzeitig besteht die Gefahr der Korrosion zwischen den einzelnen Materialschichten, die gemäß der DE 10 2011 080 977 A1 durch eine Kunststoffversiegelung beseitigt werden soll. Diese Versiegelung stellt aber einen zusätzlichen Arbeitsschritt dar, der die Herstellung eines solchen Verbindungsstückes verkompliziert und verteuert.

Eine vereinfachte Herstellungsvariante eines Verbindungsstücks zur Verbindung zweier Pole von Zellen von Batterien offenbart die DE 10 2007 063 177 A1. Hier besteht das Verbindungsstück aus einem Grundkörper, der zwei Öffnungen aufweist. In jeder der beiden Öffnungen ist ein hülsenförmiges Ausgleichselement eingebracht, wobei Ausgleichselement und Grundkörper sowie Ausgleichselement und Batteriepol stoffschlüssig miteinander verbunden werden.

Hier wird zwar die Herstellung eines Verbindungsstückes stark vereinfacht, allerdings ist die schweißtechnische Verbindung einer Innenhülse aus Aluminium oder einer Aluminiumlegierung mit einem Grundkörper aus Kupfer oder einer Kupferlegierung sehr schwierig herzustellen. Nichts desto trotz ist es aber notwendig, eine solche Hülse mit dem Grundkörper so zu verbinden, dass die Hülse unverlierbar in dem Grundkörper gehalten wird.

Zum Stand der Technik ist noch die WO 2012/102160 A1 zu nennen. Es wird ein Verbindungsstück, bestehend aus einem Grundkörper mit einer Ausnehmung beschrieben, wobei zumindest ein Einlageelement im Innenbereich dieser Ausnehmung angeordnet ist. Die Einlageelemente besitzen an ihrer Umfangsseite eine zumindest bereichsweise umlaufende Nut. Der Grundkörper besitzt einen entsprechenden Vorsprung, der durch Materialverdrängung die Nut füllt, so dass beide Bauteile formschlüssig miteinander verbunden sind. Die Nut besitzt im Querschnitt durch die Ausnehmung eine bereichsweise variierende Tiefe. Es handelt sich um eine Verbindung und je nach Ausgestaltung der Flächen auch um eine formschlüssige Verbindung, die als Auszugsicherung in Einpressrichtung dient.

Aufgabe der Verbindung ist es, ein Verbindungsstück zum leitfähigen Verbinden von Polen zweier Batterien oder Batteriezellen zur Verfügung zu stellen, bei dem die Kontaktkorrosion zwischen Verbindungsstück und dem zugeordneten Batteriepol verhindert wird, das einfach herzustellen ist und zudem eine stabile Verbindung der Batterien oder Batteriezellen ermöglicht.

Des Weiteren ist es Aufgabe der Erfindung, ein Herstellungsverfahren für ein solches Verbindungsstück anzugeben.

Die gegenständliche Aufgabe wird gelöst durch ein Verbindungsstück gemäß den Merkmalen des Patentanspruchs 1. Bevorzugte Ausgestaltungen der Erfindung sind Gegenstand der Unteransprüche 2 bis 6.

Verfahrensmäßig wird die Aufgabe löst durch ein Herstellungsverfahren gemäß Patentanspruch 7. Besondere Ausgestaltung des Herstellungsverfahrens ist Gegenstand der des Unteranspruches 8.

Ein erfindungsgemäßes Verbindungsstück aus einem Stanzblech zum leitfähigen Verbinden von Polen zweier Batterien oder Batteriezellen weist einen Grundkörper mit zumindest einer Ausnehmung auf, wobei zumindest ein Einlageelement im Innenbereich zumindest einer Ausnehmung angeordnet ist. Entweder weisen die Einlageelemente an ihrer Umfangsseite eine zumindest bereichsweise umlaufende Nut auf oder aber der Grundkörper weist an der Innenseite seiner zumindest einen Ausnehmung eine zumindest bereichsweise umlaufende Nut auf. Das jeweils korrespondierende Bauteil weist einen Vorsprung auf, der durch eine Materialverdrängung bei einem Verpressen beider oder eines der beiden Bauteile erzeugt ist. Der Vorsprung greift formschlüssig in die Nut ein, so dass der Grundkörper und jedes Einlageelement entlang des Umfangs des Einlageelements zumindest bereichsweise formschlüssig miteinander verbunden sind.

Das Verbindungsstück dient zum Verbinden von Polen zweier Batterien oder Batteriezellen. Dabei kann es sich sowohl um herkömmliche Batterien oder Batteriezellen handeln als auch um wieder aufladbare Batterien oder Batteriezellen, die zumeist als Akkus bezeichnet werden. Gleichermaßen kann es sich dabei auch um andersartige Energiespeicher handeln, die sich beispielsweise das Prinzip von Kondensatoren zu Nutze machen.

Im Allgemeinen ist der Einsatzort erfindungsgemäßer Verbindungsstücke die Batterie eines elektromotorisch angetriebenen Fahrzeugs. Dabei kann es sich um ein reines Elektrokraftfahrzeug handeln als auch um ein Vollhybrid oder Plug-In-Hybridfahrzeug. Die einzelnen Batteriezellen der Gesamtbatterie werden in Form einer Reihenschaltung miteinander verbunden. Das bedeutet, dass immer die Kathode einer Batteriezelle mit der Anode einer benachbarten Zelle über das Verbindungsstück verbunden werden.

Das erfindungsgemäße Verbindungsstück ist bevorzugt so ausgestaltet, dass der Kontaktbereich, in dem das Verbindungsstück mit dem jeweiligen Batteriepol verbunden ist, aus dem Material oder der Materialverbindung ausgebildet ist, aus dem auch der entsprechende Batteriekontakt besteht.

Das Verbindungsstück weist einen Grundkörper auf, der mit zumindest einer Ausnehmung versehen ist. Diese zumindest eine Ausnehmung kann beispielsweise rund, elliptisch oder als regelmäßiges oder unregelmäßiges Vieleck gestaltet sein. Bevorzugt besitzt der Grundkörper zwei Ausnehmungen, von denen jeweils eine mit einem Batteriepol benachbarter Batteriezellen verbunden ist. Es ist aber auch möglich, dass nur eine Ausnehmung vorhanden ist, beispielsweise in Form eines Langlochs, die dann mit beiden Batteriepolen verbunden ist.

Die Ausnehmung muss sich nicht zwingend in Form eines Loches ausschließlich im Innenbereich des Grundkörpers befinden. Sie kann auch im Randbereich des Grundkörpers in Form einer Einbuchtung angeordnet sein, so dass die Form der Ausnehmung beispielsweise ein Halbkreis, eine halbe Ellipse oder ein Teilbereich eines regelmäßigen oder unregelmäßigen Vielecks ist.

Im Innenbereich zumindest einer Ausnehmung ist ein Einlageelement angeordnet. Dieses Einlageelement bildet einen Kontaktbereich zwischen dem Verbindungsstück und dem zugeordneten Batteriepol. Das Einlageelement kann dabei mit seinem vollen Umfang im Kontakt mit dem Grundkörper stehen. Ist die Ausnehmung rund, elliptisch oder mehreckig ausgestaltet, so besitzt das Einlageelement einen korrespondierenden runden, elliptischen oder mehreckigen Außenumfang. Andererseits, beispielsweise wenn die Ausnehmung die Form eines Langlochs besitzt, kann das Einlageelement auch nur mit einem Teil seines Außenumfangs im Kontakt mit dem Grundkörper stehen. Bei einer Ausnehmung in Form eines Langlochs ist das Einlageelement nur an einem Ende des Langlochs angeordnet. Das Einlageelement berührt den Grundkörper dann nur am Ende des Langlochs, wohingegen der Bereich seines Umfangs, der zur Mitte des Langlochs hin zeigt, freiliegend bleibt.

Um zu verhindern, dass das Einlageelement ungewollt aus der Ausnehmung fällt, besitzt entweder das Einlageelement zumindest bereichsweise an seiner Umfangsseite eine umlaufende Nut. Alternativ kann auch der Grundkörper an der Innenseite seiner zumindest einen Ausnehmung eine entsprechende Nut aufweisen. Das jeweils korrespondierende Bauteil weist einen Vorsprung auf, der in die Nut formschlüssig eingreift. Dadurch wird ein Hinterschnitt gebildet, der verhindert, dass das Einlageelement aus der Ausnehmung ungewollt herausfallen kann.

Je nach Ausgestaltung des Grundkörpers und seiner Ausnehmungen kann der Formschluss vollständig entlang des Umfangs des Einlageelements oder auch nur bereichsweise ausgebildet sein.

Auf diese Weise wird eine stabile Verbindung zwischen dem Grundkörper und dem Einlageelement hergestellt, wodurch die Verbindung zwischen einzelnen Batterien oder Batteriezellen verbessert wird. Nach dem Einlegen des Einlageelements in die Ausnehmung werden die Bauteile miteinander verpresst, bevorzugt durch Aufbringen eines Drucks von oben auf die gemeinsame Oberfläche der Bauteile. Dabei kann der Druck entweder auf beide Bauteile gleichzeitig oder nur auf eines der Bauteile aufgebracht werden. Durch das Verpressen wird in die Nut des einen Körpers Material des korrespondierenden Körpers verdrängt. Dadurch entsteht der Vorsprung, der formschlüssig in die Nut eingreift.

Die Nut kann beispielsweise einen halbrunden, halbelliptischen, dreieckigen oder andersgeartet mehreckigen Querschnitt haben, so dass ein guter Materialfluss in den Innenraum der Nut gewährleistet ist.

Das nachträgliche Erzeugen des Vorsprungs ermöglicht es, die Einlageelemente problemlos in die Ausnehmungen einlegen zu können. Das Herstellen der formschlüssigen Verbindung durch das Verpressen lässt sich zudem äußerst unproblematisch in den Herstellungsprozess einfügen.

In einer bevorzugten Ausgestaltung der Erfindung besteht das Einlageelement aus einem anderen Material als der Grundkörper.

Hier spielt insbesondere die Anpassungsmöglichkeit des Verbindungsstückes an die jeweils aus unterschiedlichen Materialien bestehenden Anoden und Kathoden der Batteriezellen eine Rolle. Bevorzugt sollen die Kontaktstellen des Verbindungsstückes aus dem gleichen Material oder einer ähnlichen Materiallegierung bestehen wie die Batteriekontakte. Dies verhindert Kontaktkorrosion zwischen Verbindungsstück und Batteriekontakt, so wie es eine unter Umständen einfachere Verbindung zwischen Verbindungsstück und Batteriekontakt ermöglicht.

Verbindungsstück und Batteriekontakt können in äußerst einfacher Weise durch eine Verschraubung miteinander verbunden werden. Dabei werden Verbindungsstück und Batteriekontakt lediglich aufeinander gepresst. Es ist aber auch möglich, eine schweißtechnische Verbindung herzustellen, was umso einfacher realisierbar ist, wenn die miteinander zu verschweißenden Komponenten aus ähnlichen Materialien bestehen.

Die Verbindung von Grundkörper und Einlageelement durch Formschluss ist zudem völlig unabhängig von den verwendeten Materialien. Es sind keine Schwierigkeiten in Bezug auf Verschweißung oder ähnliche stoffschlüssige Verbindungen zu bedenken.

Durch das Verpressen der beiden Bauteile wird zudem ein vollständig gasdichter Formschluss erzeugt. Es kann also weder Luftsauerstoff noch Feuchtigkeit an die Kontaktfläche zwischen den beiden Bauteilen gelangen, so dass eine korrosive Zerstörung der Verbindung von vornherein verhindert wird.

In einer weiteren besonderen Ausgestaltung der Erfindung besitzt das Material, aus dem das Einlageelement besteht, einen größeren Ausdehnungskoeffizienten als das Material, aus dem der Grundkörper besteht.

Diese Ausgestaltung hat physikalische Gründe. Batteriezellen in Kraftfahrzeugen unterliegen schnell aufeinander folgenden Lade- und Entladezyklen. Damit einher gehen immer Temperaturänderungen der Batteriezellen und der Verbindungsstücke, wodurch es zu thermisch bedingten Volumenänderungen der einzelnen Batteriebestandteile und auch der Bestandteile des Verbindungsstückes kommt. Um zu verhindern, dass durch eine ungleichmäßige Längenausdehnung der einzelnen Materialien das Einlageelement aus der Ausnehmung gleitet, besitzt das Material des Einlageelements bevorzugt einen größeren Ausdehnungskoeffizienten als das Material des Grundkörpers. So wird sichergestellt, dass das Einlageelement zu jedem Zeitpunkt unverlierbar in dem Grundkörper gehalten wird.

In bevorzugter Ausgestaltung der Erfindung besteht weiterhin der Grundkörper des Verbindungsstücks aus Kupfer oder einer Kupferlegierung und das Einlageelement aus Aluminium oder einer Aluminiumlegierung oder aus Stahl, der mit Aluminium oder einer Aluminiumlegierung beschichtet ist.

Durch diese Ausgestaltung der Erfindung wird dem Umstand Rechnung getragen, dass die Batteriepole zumeist aus Kupfer oder einer Kupferlegierung bei den Kathoden bestehen, wohingegen die Anoden zumeist aus Aluminium oder einer Aluminiumlegierung hergestellt sind. Die Verbindungsstücke können somit angepasst an die Materialzusammensetzung der Batteriekontakte hergestellt werden. Dadurch wird, wie bereits beschrieben, die Gefahr der Kontaktkorrosion zwischen Verbindungsstück und Batteriekontakt beseitigt und die Verbindungsfähigkeit zwischen Verbindungsstück und Batteriekontakt optimiert.

In einer weiteren besonderen Ausgestaltung der Erfindung ist vorgesehen, dass das Einlageelement ringförmig ist.

Der äußere Umfang des Einlageelements ist an die Ausgestaltung der Ausnehmung in den Grundkörper angepasst. Das bedeutet, dass das ringförmige Einlageelement beispielsweise einen runden, elliptischen oder vieleckigen äußeren Umfang besitzen kann. Das Einlageelement ist in der Mitte mit einem Loch versehen, durch das eine Schraube oder ein Schraubbolzen greifen kann, um eine Verbindung zum Batteriekontakt herzustellen. Größe und Form des Loches sind daher an die Schrauben oder Schraubbolzen angepasst.

Insbesondere Einlageelemente mit einem nicht kreisrunden Außenumfang, also elliptische oder vieleckig gestaltete Einlageelement, bieten den Vorteil, dass das Einlageelement drehfest in der korrespondierend gestalteten Ausnehmung gehalten ist. Da das Verbindungsstück bevorzugt durch eine Schraube oder einen Schraubbolzen an dem Batteriekontakt befestigt ist, soll sich das Einlageelement beim Festziehen der Schraube oder einer Mutter nicht lösen können, sondern verdrehfest in der Ausnehmung festsitzen.

Bevorzugt ist die kleineste Ausdehnung des Einlageelements größer als die größte Ausdehnung des Schraubenkopfes oder der Mutter, damit ein vollflächiger Kontakt von Schraubkopf und Mutter mit dem Einlageelement gewährleistet ist.

Um ein kreisrundes Einlageelement ebenfalls verdrehsicher auszugestalten, ist die Nut des Einlageelements bzw. des Grundkörpers in der Erfindung so ausgestaltet, dass ihre Tiefe bereichsweise variiert. Dadurch wird beim Verpressen des Verbindungsstücks ebenfalls eine verdrehsichere, formschlüssige Verbindung erschaffen. Auch bei anderen Umfangsgeometrien des Einlageelements führt die variierende Tiefe der Nut zu einer zusätzlichen Verdrehsicherung.

In einer weiteren besonderen Ausgestaltung der Erfindung weisen der Grundkörper und die Einlageelemente dieselbe Dicke auf und bilden somit eine bündige Oberfläche.

Bevorzugt sind Grundkörper und Einlageelemente 0,8 bis 1,0 mm dick. Je nach Einsatzsituation können die Bauteile aber auch größere oder kleinere Dicken aufweisen, beispielsweise wenn größere oder geringere Steifigkeiten erforderlich sind oder wenn aufgrund des Einsatzes besonderer Materialsorten eine größere oder kleinere Dicke notwendig ist.

Eine bündige Oberfläche hat den Vorteil, dass bei der Montage des Verbindungsstücks keinerlei Dickensprünge beachtet werden müssen. Eine entsprechende Gestaltung der Batteriekontakte ist damit nicht notwendig. Zudem wird das Einlegen der Einlageelemente in die Ausnehmungen der Grundkörper vereinfacht, da nicht auf eine entsprechende Positionierung der Einlageelemente geachtet werden muss.

Auch kann die Herstellung des Verbindungsstücks und das Verpressen der Bauteile in einem einfacher gestalteten Werkzeug durchgeführt werden, wenn Grundkörper und Einlageelemente eine bündige Oberfläche bilden, da dann in den Presswerkzeugen ein Dickensprung nicht berücksichtigt werden muss.

Zudem ist eine bündige Oberfläche weniger anfällig für die Anlagerung von Schmutz und Feuchtigkeit in den Kanten und für Kerbwirkungen, die auf Dauer die Stabilität des Verbindungsstückes schwächen können.

Das Herstellungsverfahren für ein Verbindungsstück aus einem Stanzblech zum leitfähigen Verbinden von Polen zweiter Batterien oder Batteriezellen ist gekennzeichnet durch die folgenden Verfahrensschritte:
- Bereitstellen eines Rohbleches sowie zumindest eines Einlageelements;
- Stanzen zumindest einer Ausnehmung in das Rohblech;
- Einlegen mindestens eines Einlageelements in zumindest einer Ausnehmung;
- Verpressen von Einlageelementen und Rohblech, so dass zwischen dem äußeren Umfang des Einlageelements und dem inneren Umfang der Ausnehmung zumindest bereichsweise eine formschlüssige Verbindung entsteht;
- Ausstanzen der äußeren Kontur eines Grundkörpers des Verbindungsstücks aus dem Rohblech;
- Abtrennen des Verbindungsstücks von dem Rohblech.

Die Reihenfolge dieser Verfahrensschritte ist durch die Reihenfolge der Aufzählung nicht festgelegt. Die Abfolge der einzelnen Stanzschritte kann auch in umgekehrter Reihenfolge ablaufen, so dass zunächst der Grundkörper aus einem Rohblech gestanzt wird und danach die Ausnehmungen in den Grundkörper gestanzt werden.

Entweder wird das zumindest eine Einlageelement entlang seines äußeren Umfangs zumindest bereichsweise mit einer Nut versehen. Beim Verpressen fließt das Material des Rohbleches in die Nut zur Schaffung einer formschlüssigen Verbindung.

Das Verpressen wird bevorzugt derart durchgeführt, dass Druck auf die untere und/oder die obere Oberfläche entweder des Rohblechs oder des Rohblechs und des Einlageelements ausgeübt wird. Durch diesen Druck wird das Material des Rohblechs verdrängt und fließt in die Nut des Einlageelements.

Dadurch entsteht an der Innenseite der zuvor ausgestanzten Ausnehmung ein Vorsprung, der formschlüssig in die Nut eingreift. Dadurch entsteht wiederrum ein Hinterschnitt, der verhindert, dass das Einlageelement aus der Ausnehmung herausgleiten kann.

Anstelle eines Pressvorgangs kann auch ein Verprägen oder jedes andere Verfahren eingesetzt werden, durch das der Materialfluss realisiert werden kann.

Es ist auch möglich, dass der Pressendruck nicht auf die Oberflächen der Bauteile ausgeübt wird, sondern auf die schmaleren Seitenflächen.

Alternativ wird nach dem Stanzen der zumindest einen Ausnehmung zumindest eine Ausnehmung entlang ihres inneren Umfangs zumindest bereichsweise mit einer Nut versehen, wobei beim Verpressen das Material des Einlageelements in die Nut zur Schaffung einer formschlüssigen Verbindung fließt.

Hier wird zur Herstellung einer formschlüssigen Verbindung das gleiche Prinzip wie vorstehend beschrieben genutzt, nur dass Nut und Vorsprung am jeweils anderen Bauteil ausgebildet sind. Entsprechend wird der Pressvorgang angepasst. Die Verfahrensvarianten und Vorteile der Verbindung bleiben dieselben.

In einer weiteren Ausgestaltung der Erfindung wird das Verbindungsstück durch Verfahren wie Biegen, Stanzen, Schneiden und dergleichen weiter bearbeitet.

Durch weitere Bearbeitungsschritte kann das Verbindungsstück an die jeweilige Ausgestaltung der Batteriekontakte maßgeschneidert angepasst werden. Es kann zum Beispiel in eine bestimmte Form gebogen werden, es können weitere Anbindungspunkte angebracht werden oder es kann überschüssiges Material entfernt werden.

Die häufigen Lade- und Entladeprozesse der Batterien bzw. Batteriezellen bringt es mit sich, dass die Batterien oder Batteriezellen bedingt durch ihre Erwärmung während der Prozesse einer Längen- bzw. Volumenänderung unterliegen. Das bedeutet, dass sie in Abhängigkeit von Ladungszustand und/oder Temperatur ihr Volumen ändern. Demzufolge ist es vorteilhaft, wenn die Verbindungsstücke so ausgestaltet sind, dass sie diese Volumenänderungen kompensieren können. Dies kann beispielsweise durch das Einbringen von Schlitzen in das Verbindungsstück geschehen oder auch, indem die Verbindungsstücke in eine Form gebogen werden, in der sie in der Lage sind, diese Längenschwankungen zu kompensieren. Zu diesem Zweck werden sie in einem oder mehreren Arbeitsschritten gebogen, gestanzt, beschnitten oder dergleichen.

Vorteilhaft ist insbesondere bei dem hier vorgestellten Herstellungsverfahren, dass dieses in äußerst einfacher Weise in einem Verbundfolgewerkzeug durchgeführt werden kann. Die äußerst einfache Geometrie des Grundkörpers kann durch nachgelagerte Verfahrensschritte wie Biegen, Stanzen, Schneiden und dergleichen in eine individuelle Form gebracht werden.

Zudem sind für das Verfahren, auch bedingt durch die Geometrie des Verbindungsstückes, keine komplexen Werkzeuge notwendig, so dass diese auch kostengünstig bereitgestellt werden können.

Die Erfindung wird anhand von schematischen Zeichnungen im Folgenden weiter erläutert. Dabei bilden alle beschriebenen und/oder bildlich dargestellten Merkmale für sich oder in beliebiger, sinnvoller Kombination den Gegenstand der vorliegenden Erfindung, auch unabhängig von ihrer Zusammenfassung in den Ansprüchen oder deren Rückbeziehung.

Dabei zeigen:
- Figur 1a: eine mögliche Ausgestaltung des Grundkörpers;
- Figur 1b: eine weitere mögliche Ausgestaltung des Grundkörpers;
- Figur 2a: eine mögliche Ausgestaltung einer Nut in dem Grundkörper;
- Figur 2b: eine mögliche Ausgestaltung einer Nut in dem Einlegeelement;
- Figur 3: die formschlüssige Verbindung von Grundkörper und Einlageelement und
- Figur 4: die Abfolge der Schritte im Herstellungsverfahren.

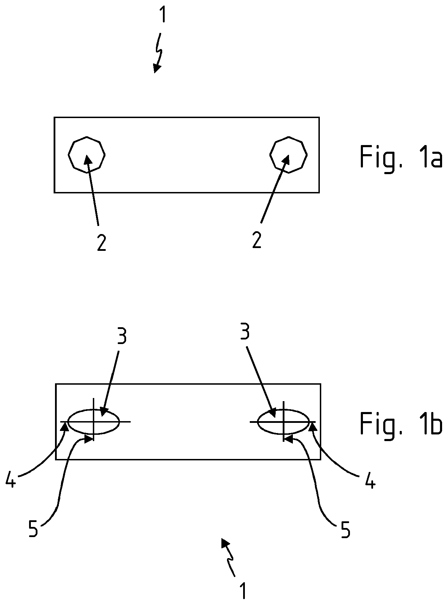

Identische Gegenstände in den Zeichnungen werden mit identischen Bezugszeichen bezeichnet. Die Figuren 1a und 1b zeigen jeweils einen Grundkörper 1 eines Verbindungsstücks in einer möglichen Ausgestaltungsform. In Figur 1a besitzt der Grundkörper 1 zwei Ausnehmungen 2, die jeweils als Oktagon gestaltet sind.

Der Umfang eines zugehörigen Einlageelements wäre in diesem Falle ebenfalls in Form eines Achtecks gestaltet, wodurch bereits durch die Form der Ausnehmungen und des Einlageelements eine Verdrehsicherung für das Einlageelement gewährleistet ist.

In Figur 1b ist ein Grundkörper 1 mit zwei elliptischen Ausnehmungen 3 abgebildet.

Das zugehörige Einlageelement besitzt in diesem Fall eine ebenfalls elliptische äußere Kontur. Eine Ellipse ist durch ihre Hauptachse 4 und ihre Nebenachse 5 charakterisiert. Diese beiden Achsen sind unterschiedlich lang, so dass sich hier durch die geometrische Form bedingt wiederum ein Verdrehungshemmnis für das Einlageelement ergibt.

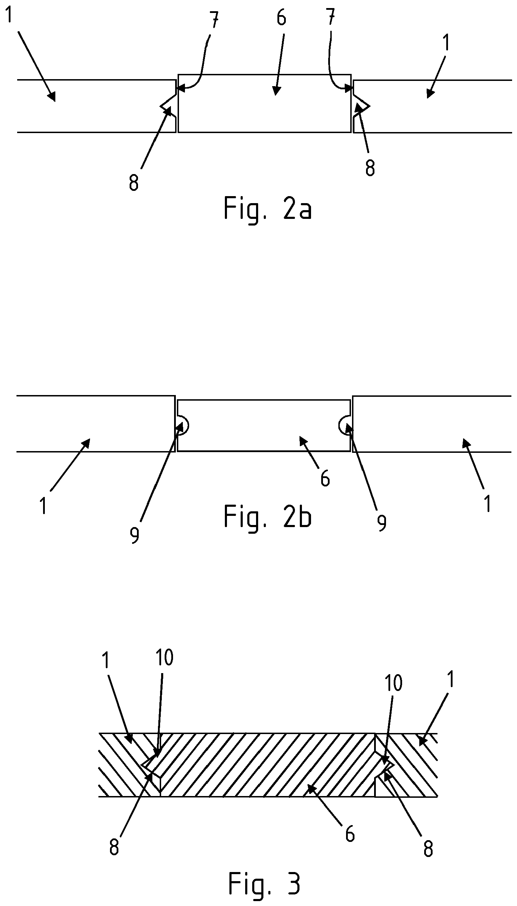

In Figur 2a ist der Querschnitt durch einen Grundkörper 1 im Bereich einer Ausnehmung dargestellt. In die Ausnehmung ist ein Einlageelement 6 eingelegt, wobei die beiden Bauteile Grundkörper 1 und Einlageelement 6 noch nicht miteinander verpresst worden sind. Der innere Umfang 7 der Ausnehmung des Grundkörpers 1 ist mit einer umlaufenden Nut 8 versehen, die im Querschnitt dreieckig ausgestaltet ist.

Das Einlageelement 6 weist im unverpressten Zustand eine größere Dicke auf als der Grundkörper 1. Da in bevorzugter Weise nach dem Verpressen Einlageelement 6 und Grundkörper 1 dieselbe Dicke aufweisen sollen, muss das Material, das beim Verpressen in die Nut 8 fließen soll, in der Dicke des Einlageelements 6 vorgehalten werden.

Die umgekehrte Ausgestaltung der Erfindung ist in Figur 2b gezeigt. Hier ist ebenfalls ein Einlageelement 6 in einer Ausnehmung des Grundelements 1 eingelegt, wobei jedoch eine Nut 9, die einen halbkreisförmigen Querschnitt besitzt, am äußeren Umfang des Einlageelements 6 ausgeformt ist.

Hier wird durch Druck auf das Grundelement 1 Material des Grundelements 1 in den Bereich der Nut 9 verschoben und bildet somit einen Hinterschnitt, der das Einlageelement 6 unverlierbar in der Ausnehmung hält.

In dieser Ausgestaltung der Erfindung besitzt das Grundelement 1 zunächst eine größere Dicke als das Einlageelement, damit zur Erreichung einer identischen Dicke nach dem Verpressen beider Bauteile das für den Materialfluss notwendige Material des Grundkörpers 1 in dessen Dicke vorgehalten werden muss.

Die Ausführungsform des Verbindungsstückes aus Figur 2a nach dem Pressvorgang wird in Figur 3 gezeigt. Hier ist sichtbar, dass das Material des Einlageelements 6 in die Nut 8 des Grundkörpers 1 geflossen ist, wodurch sich ein Vorsprung 10 gebildet hat, der formschlüssig in die Nut 8 eingreift.

Grundkörper 1 und Einlageelement 6 sind damit formschlüssig miteinander verbunden, so dass Einlageelement 6 unverlierbar in der Ausnehmung des Grundkörpers 1 gehalten wird.

Bedingt durch den Materialfluss hat sich die Dicke des Einlageelements 6 verringert, so dass Grundkörper 1 und Einlageelement 6 dieselbe Dicke aufweisen und gemeinsam eine bündige Oberfläche bilden.

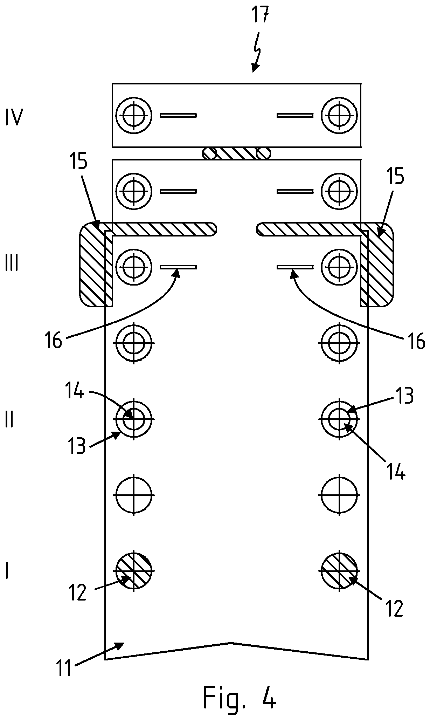

Die Herstellung eines erfindungsgemäßen Verbindungsstücks kann vorteilhafterweise in einem Verbundfolgewerkzeug durchgeführt werden. Die einzelnen Herstellungsschritte sind in Figur 4 verdeutlicht.

Neben dem in Figur 4 beispielhaft dargestellten Verfahren ist natürlich eine Mehrzahl von Kombinationen der einzelnen Verfahrensschritte möglich. Die hier gezeigte Ausführungsform ist daher stellvertretend für alle anderen Ausführungsvarianten und -kombinationen zu betrachten.

In Figur 4 ist ein Rohblech 11 dargestellt, dass in mehreren, aufeinander folgenden Bearbeitungsschritten I bis IV zu einem erfindungsgemäßen Verbindungsstück verarbeitet wird. Das Rohblech besitzt hier in diesem Ausführungsbeispiel eine Breite, die in etwa der Länge des späteren Grundkörpers des Verbindungsstückes entspricht.

Das Rohblech kann als Endlosblech von einer Rolle abgewickelt werden. Es kann aber auch in Form von abgelängten Blechstreifen in ein Verbundfolgewerkzeug eingelegt werden.

In Schritt I werden zwei Ausnehmungen 12 aus dem Rohblech ausgestanzt. Die in einem Verfahrensschritt jeweils ausgestanzten Bereiche des Rohblechs werden in Figur 4 schraffiert dargestellt.

In diesem Ausführungsbeispiel sind die Ausnehmungen 12 kreisrund gestaltet. Als nächstes werden in Schritt II Einlageelemente 13 in die beiden Ausnehmungen eingelegt. Diese Einlageelemente besitzen die Form kreisrunder Ringe und sind mit einer umlaufenden Nut an ihrem äußeren Umfang versehen. Das Loch 14 in der Mitte dient dazu, Schrauben oder Schraubbolzen hindurchzuführen, um eine Schraubverbindung mit den jeweiligen Batteriekontakten herstellen zu können. Ebenfalls im Schritt II werden die Einlageelemente 13 und das Rohblech 11 so miteinander verpresst, dass es zu einer Verschiebung des Materials des Rohblechs 11 in die Nuten der Einlageelemente 13 kommt und somit eine formschlüssige Verbindung zwischen Rohblech 11 und Einlageelementen 13 hergestellt wird. In Schritt III wird das Rohblech 11 so beschnitten (Beschneidungsbereich 15), dass der Grundkörper des Verbindungsstücks seine äußere Geometrie erhält.

Gleichzeitig werden in diesem Ausführungsbeispiel auch Schlitze 16 eingebracht, die dazu dienen, dem Verbindungsstück eine größere Flexibilität zu verleihen.

In einem letzten Arbeitsschritt IV wird das fertige Verbindungsstück 17 von dem Rohblech 11 abgetrennt.

Gegebenenfalls kann das Verbindungsstück 17 nun weiteren Bearbeitungsschritten wie Biegen, Stanzen oder Schneiden und dergleichen unterworfen werden, wenn dies konstruktionsbedingt notwendig sein sollte.

### Bezugszeichen:

- 1 -: Grundkörper
- 2 -: Ausnehmung
- 3 -: Ausnehmung
- 4 -: Hauptachse
- 5 -: Nebenachse
- 6 -: Einlageelement
- 7 -: Umfang
- 8 -: Nut
- 9-: Nut
- 10-: Vorsprung
- 11-: Rohblech
- 12-: Ausnehmung
- 13-: Einlageelement
- 14-: Loch
- 15-: Beschneidungsbereich
- 16-: Schlitz
- 17-: Verbindungsstück

## Patentansprüche

1. Verbindungsstück aus einem Stanzblech zum leitfähigen Verbinden von Polen zweier Batterien oder Batteriezellen, das einen Grundkörper (1) mit zumindest einer Ausnehmung (2, 3, 12) aufweist, wobei zumindest ein Einlageelement (6, 13) im Innenbereich zumindest einer Ausnehmung angeordnet ist, wobei entweder die Einlageelemente (6, 13) an ihrer Umfangsseite eine zumindest bereichsweise umlaufende Nut (9) aufweisen oder der Grundkörper (1) an der Innenseite (7) seiner zumindest einen Ausnehmung (2, 3, 12) eine zumindest bereichsweise umlaufende Nut (8) aufweist, wobei das jeweils korrespondierende Bauteil einen Vorsprung aufweist, der durch eine Materialverdrängung bei einem Verpressen beider oder eines der beiden Bauteile erzeugt ist und der formschlüssig in die Nut (8, 9) eingreift, so dass der Grundkörper (1) und jedes Einlageelement (6, 13) entlang des Umfangs des Einlageelements (6, 13) zumindest bereichsweise formschlüssig miteinander verbunden sind, **dadurch gekennzeichnet, dass** die Nut (8, 9) zur Verdrehsicherung in Umfangsrichtung eine variierende Tiefe aufweist.

2. Verbindungsstück nach Anspruch 1, **dadurch gekennzeichnet, dass** das Einlageelement (6, 13) aus einem anderen Material besteht als der Grundkörper (1).

3. Verbindungsstück nach Anspruch 2, **dadurch gekennzeichnet, dass** das Material des Einlageelements (6, 13) den größeren thermischen Ausdehnungskoeffizienten besitzt.

4. Verbindungsstück nach Anspruch 2 oder 3, **dadurch gekennzeichnet, dass** der Grundkörper (1) aus Kupfer oder einer Kupferlegierung besteht und das Einlageelement (6, 13) aus Aluminium oder einer Aluminiumlegierung oder aus Stahl, der mit Aluminium oder einer Aluminiumlegierung beschichtet ist, besteht.

5. Verbindungsstück nach mindestens einem der vorstehenden Ansprüche, **dadurch gekennzeichnet, dass** das Einlageelement (6, 13) ringförmig ist.

6. Verbindungsstück nach mindestens einem der vorstehenden Ansprüche, **dadurch gekennzeichnet, dass** der Grundkörper (1) und die Einlageelemente (6, 13) dieselbe Dicke aufweisen und eine bündige Oberfläche bilden.

7. Herstellungsverfahren für ein Verbindungsstück aus einem Stanzblech zum leitfähigen verbinden von Polen zweier Batterien oder Batteriezellen nach mindestens einem der Ansprüche 1 bis 6, **gekennzeichnet durch** folgende Verfahrensschritte:
- Bereitstellen eines Rohblechs (11) sowie zumindest eines Einlageelements (6, 13);
- Stanzen zumindest einer Ausnehmung (2, 3, 12) in das Rohblech (11);
- Einlegen mindestens eines Einlageelements (6, 13) in zumindest eine Ausnehmung (2, 3, 12);
- Verpressen von Einlageelementen (6, 13) und Rohblech (11), so dass zwischen dem äußeren Umfang des Einlageelements (6, 13) und dem inneren Umfang der Ausnehmung (2, 3, 12) zumindest bereichsweise eine formschlüssige Verbindung entsteht;
- Ausstanzen der äußeren Kontur eines Grundkörpers (1) des Verbindungsstücks aus dem Rohblech (11); Abtrennen des Verbindungsstückes von dem Rohblech (11), wobei entweder
- das zumindest eine Einlageelement (6, 13), zumindest bereichsweise entlang seines äußeren Umfangs mit einer Nut (9) versehen wird und beim Verpressen das Material des Rohblechs (11) in die Nut (9) zur Schaffung einer formschlüssigen Verbindung fließt, wobei die Nut (9) zur Verdrehsicherung in Umfangsrichtung eine variierende Tiefe aufweist, oder
- wobei nach dem Stanzen der zumindest einen Ausnehmung (2, 3, 12) zumindest eine Ausnehmung (2, 3, 12) zumindest bereichsweise entlang ihres inneren Umfangs mit einer Nut (8) versehen wird und beim Verpressen das Material des Einlageelements (6, 13) in die Nut (8) zur Schaffung einer formschlüssigen Verbindung fließt, wobei die Nut (8) zur Verdrehsicherung in Umfangsrichtung eine variierende Tiefe aufweist.

8. Herstellungsverfahren nach Anspruch 7, **dadurch gekennzeichnet, dass** das Verbindungsstück durch Verfahren wie Biegen, Stanzen, Schneiden bearbeitet wird.

## Claims

1. Connecting piece made of a stamped sheet metal for the conductive connection of poles of two batteries or battery cells, which has a basic body (1) having at least one recess (2, 3, 12), wherein at least one insert element (6, 13) is disposed in the inner region of at least one recess, wherein either the insert elements (6, 13) at their peripheral side have an at least sectionally peripheral groove (9) or the basic body (1) at the inner side (7) of its at least one recess (2, 3, 12) has an at least sectionally peripheral groove (8), wherein the respectively corresponding component has a projection, which is generated by a material displacement when compressing both or one of the two components and which engages form-fittingly into the groove (8, 9), such that the basic body (1) and each insert element (6, 13) along the periphery of the insert element (6, 13) are connected with one another form-fittingly at least sectionally, **characterised in that** the groove (8, 9) has a varying depth in peripheral direction for securing against rotation.

2. Connecting piece according to claim 1, **characterised in that** the insert element (6, 13) is made of a material other than that of the basic body (1).

3. Connecting piece according to claim 2, **characterised in that** the material of the insert element (6, 13) has the greater thermal expansion coefficient.

4. Connecting piece according to claim 2 or 3, **characterised in that** the basic body (1) is made of copper or a copper alloy and the insert element (6, 13) is made of aluminium or an aluminium alloy or of steel which is coated with aluminium or an aluminium alloy.

5. Connecting piece according to any of the preceding claims, **characterised in that** the insert element (6, 13) is annular.

6. Connecting piece according to any of the preceding claims, **characterised in that** the basic body (1) and the insert elements (6, 13) have the same thickness and form a flush surface.

7. Production method for a connecting piece made of a stamped sheet-metal for the conductive connection of poles of two batteries or battery cells according to at least one of claims 1 to 6, **characterised by** following method steps:
- provision of a sheet steel (11) and at least one insert element (6, 13);
- punching of at least one recess (2, 3, 12) into the sheet steel (11);
- inserting at least one insert element (6, 13) into at least one recess (2, 3, 12);
- compressing insert elements (6, 13) and sheet steel (11), such that between the outer periphery of the insert element (6, 13) and the inner periphery of the recess (2, 3, 12) there results at least sectionally a form-fitting connection;
- punching out of the outer contour of a basic body (1) of the connecting piece out of the sheet steel (11);
separating out the connecting piece from the sheet steel (11), wherein either
- the at least one insert element (6, 13), is furnished at least sectionally along its outer periphery with a groove (9) and at the compressing the material of the sheet steel (11) flows into the groove (9) for the creation of a form-fitting connection, wherein the groove (9) has a varying depth in peripheral direction for securing against rotation, or
- wherein after the stamping of the at least one recess (2, 3, 12) at least one recess (2, 3, 12) is furnished at least sectionally along its inner periphery with a groove (8) and at the compressing the material of the insert element (6, 13) flows into the groove (8) for the creation of a form-fitting connection, wherein the groove (8) has a varying depth in peripheral direction for securing against rotation.

8. Production method according to claim 7, **characterised in that** the connecting piece is processed by methods such as bending, stamping, cutting.

## Revendications

1. Raccord en une tôle découpée pour relier de manière conductrice des pôles de deux batteries ou éléments de batterie, qui présente un corps de base (1) avec au moins un évidement (2, 3, 12), dans lequel au moins un élément d'insertion (6, 13) est disposé dans la zone intérieure d'au moins un évidement, dans lequel soit les éléments d'insertion (6, 13) présentent, au niveau de leur côté périphérique, une rainure (9) périphérique au moins par endroits, soit le corps de base (1) présente, au niveau du côté intérieur (7) de son au moins un évidement (2, 3, 12), une rainure (8) périphérique au moins par endroits, dans lequel le composant respectivement correspondant présente une saillie, qui est générée par un refoulement de matériau lors d'une compression des deux ou d'un des deux composants et qui vient en prise par correspondance de forme avec la rainure (8, 9), de sorte que le corps de base (1) et chaque élément d'insertion (6, 13) soient reliés l'un à l'autre par correspondance de forme au moins par endroits le long de la périphérie de l'élément d'insertion (6, 13), **caractérisé en ce que** la rainure (8, 9) présente une profondeur variable pour la fixation contre la rotation dans la direction périphérique.

2. Raccord selon la revendication 1, **caractérisé en ce que** l'élément d'insertion (6, 13) est en un autre matériau que le corps de base (1).

3. Raccord selon la revendication 2, **caractérisé en ce que** le matériau de l'élément d'insertion (6, 13) possède le plus grand coefficient de dilatation thermique.

4. Raccord selon la revendication 2 ou 3, **caractérisé en ce que** le corps de base (1) est en cuivre ou en un alliage de cuivre et l'élément d'insertion (6, 13) est en aluminium ou en un alliage d'aluminium ou en acier, qui est revêtu d'aluminium ou d'un alliage d'aluminium.

5. Raccord selon au moins l'une quelconque des revendications précédentes, **caractérisé en ce que** l'élément d'insertion (6, 13) est annulaire.

6. Raccord selon au moins l'une quelconque des revendications précédentes, **caractérisé en ce que** le corps de base (1) et les éléments d'insertion (6, 13) présentent la même épaisseur et forment une surface affleurante.

7. Procédé de fabrication d'un raccord en une tôle découpée pour relier de manière conductrice des pôles de deux batteries ou éléments de batterie selon au moins l'une quelconque des revendications 1 à 6, **caractérisé par** les étapes de procédé suivantes :
- fourniture d'une tôle brute (11) ainsi que d'au moins un élément d'insertion (6, 13) ;
- découpage d'au moins un évidement (2, 3, 12) dans la tôle brute (11) ;
- insertion d'au moins un élément d'insertion (6, 13) dans au moins un évidement (2, 3, 12) ;
- compression d'éléments d'insertion (6, 13) et de la tôle brute (11) de sorte qu'une liaison par correspondance de forme soit créée au moins par endroits entre la périphérie extérieure de l'élément d'insertion (6, 13) et la périphérie intérieure de l'évidement (2, 3, 12) ;
- estampage du contour extérieur d'un corps de base (1) du raccord dans la tôle brute (11) ;
séparation du raccord de la tôle brute (11), dans lequel soit
- l'au moins un élément d'insertion (6, 13) est doté d'une rainure (9) au moins par endroits le long de sa périphérie extérieure et, lors de la compression, le matériau de la tôle brute (11) entre dans la rainure (9) pour la création d'une liaison par correspondance de forme, dans lequel la rainure (9) présente une profondeur variable pour la fixation contre la rotation dans la direction périphérique, soit
- dans lequel, après le découpage de l'au moins un évidement (2, 3, 12), au moins un évidement (2, 3, 12) est doté d'une rainure (8) au moins par endroits le long de sa périphérie intérieure et, lors de la compression, le matériau de l'élément d'insertion (6, 13) entre dans la rainure (8) pour la création d'une liaison par correspondance de forme, dans lequel la rainure (8) présente une profondeur variable pour la fixation contre la rotation dans la direction périphérique.

8. Procédé de fabrication selon la revendication 7, **caractérisé en ce que** le raccord est usiné par un procédé tel que flexion, découpage, coupe.
